# EUROPÄISCHE PATENTSCHRIFT

(11) **EP 2 697 527 B1**
(45) Veröffentlichungstag und Bekanntmachung des Hinweises auf die Patenterteilung: **27.05.2015**
(21) Anmeldenummer: 12703082.3
(22) Anmeldetag: 03.02.2012
(51) Int. Cl.: F16C 33/60, F16C 35/063, F16C 35/067

(54) **RADIAL-ROLLENWÄLZLAGER**
RADIAL ROLLER BEARING
PALIER À ROULEMENTS RADIAL

(30) Priorität: 15.04.2011 DE 102011007458
(43) Veröffentlichungstag der Anmeldung: 19.02.2014
(73) Patentinhaber: Schaeffler Technologies AG & Co. KG, 91074 Herzogenaurach (DE)
(72) Erfinder: AUST, Jan-Rene, 91058 Erlangen (DE); SCHÄFERS, Heinz, 91056 Erlangen (DE)
(86) Internationale Anmeldenummer: PCT/EP2012/051862
(87) Internationale Veröffentlichungsnummer: WO 2012/139783

(56) Entgegenhaltungen:
- DE-A1- 2 931 348
- DE-C- 767 618
- DE-U- 1 667 026
- Schäffler KG: "Wälzlager", 1. Oktober 2008 (2008-10-01), Schäffler KG, XP002672771, Bd. 1, Seite 742, in der Anmeldung erwähnt Abbildung 1

## Beschreibung

### Gebiet der Erfindung

Die Erfindung betrifft jeweils ein Radial-Rollenwälzlager nach den oberbegriffsbildenden Merkmalen der unabhängigen Patentansprüche 1 oder 4, welches insbesondere vorteilhaft als Loslager für hohe Radialkräfte und geringe Axialkräfte bei der Lagerung von Wellen und Rotationsteilen anwendbar ist.

### Hintergrund der Erfindung

In der Wälzlagertechnik ist es allgemein bekannt, dass die Lagerung von Wellen und Rotationsteilen zumeist in zwei als Festlager und als Loslager ausgebildeten Lagerstellen erfolgt, da somit Fertigungstoleranzen und durch Wärmedehnungen bedingte Längenänderungen zwischen der Welle und einem Gehäuse bzw. zwischen einer Achse und dem Rotationsteil ausgeglichen werden können, ohne dass zusätzliche Verspannkräfte auf die Lager wirken. Dabei übernimmt das axial festgelegte Festlager neben seinem Radiallastanteil auch alle auftretenden Axialkräfte in beiden Richtungen, während das Loslager nur seinen Radiallastanteil überträgt, da es in Axialrichtung nicht festgelegt ist und dadurch auch keine Axialkräfte übernehmen kann. Der Ausgleich der Fertigungstoleranzen und Wärmedehnungen erfolgt somit ausschließlich über das Loslager, und zwar an der Sitzstelle des Innenrings, an der Sitzstelle des Außenrings oder im Lager selbst.

Ein gattungsbildendes Radial-Rollenwälzlager für eine typische Loslagerung einer radial hoch belasteten Welle ist beispielhaft aus der DE 2 931 348 A1 vorbekannt. Dieses als Radial-Zylinderrollenlager ausgebildete Loslager besteht im Wesentlichen aus einem in ein Gehäuse eingesetzten glattzylindrischen Außenring und aus einem in diesem Außenring angeordneten Rollenkranz, der durch eine Vielzahl in einen Lagerkäfig eingesetzter sowie von diesem in Umfangsrichtung in gleichmäßigen Abständen gehaltener Wälzkörper gebildet wird. Die als Zylinderrollen ausgebildeten Wälzkörper rollen dabei auf einer durch die Innenmantelfläche des Außenrings gebildeten Außenlaufbahn und auf einer durch die Außenmantelfläche eines auf die Welle aufgeschobenen glattzylindrischen Innenrings gebildeten Innenlaufbahn ab, die in anderen Anwendungen auch durch die Außenmantelfläche der Welle selbst gebildet wird. Zur axialen Führung des Rollenkranzes liegen darüber hinaus an den Axialseiten des Außenrings zwei separate Bordscheiben an, die zusammen mit dem Außenring durch einerseits als in eine umlaufende Nut im Gehäuse eingreifender Sprengring und andererseits als verstellbarer Spannring ausgebildete Sicherungselemente gegen axiales Verschieben fixiert werden.

Ein anderes, als zweireihiges Nadellager ausgebildetes gattungsbildendes Radial-Rollenwälzlager für eine Loslagerung eines radial hoch belasteten Rotationsteils ist desweiteren aus dem Katalog der Anmelderin, Ausgabe Oktober 2008, Seite 742, unter der der Bezeichnung NAO..-ZW-ASR1 bekannt. Bei diesem im Wesentlichen ebenfalls aus einem auf eine Achse aufgeschobenen glattzylindrischen Innenring, einem auf dem Innenring angeordneten Rollenkranz und einem in ein Rotationsteil eingesetzten glattzylindrischen Außenring bestehenden Nadellager erfolgt die axiale Führung des Rollenkranzes jedoch durch zwei an den Axialseiten des Innenrings anliegende, separate Bordscheiben, die zusammen mit dem Innenring durch zwei in umlaufende Nuten in der Achse eingreifende und als Sprengringe ausgebildete Sicherungselemente axial fixiert sind.

Nachteilig bei beiden vorbeschriebenen Radial-Rollenwälzlagern ist es jedoch, dass die axiale Sicherung des Außen- bzw. Innenrings sowie der anliegenden Bordscheiben im Gehäuse oder auf der Achse durch zwei zusätzliche Bauteile erfolgt, die bei hohen Lagerstückzahlen durch den Lagerhersteller neben den bereits lose mitgelieferten Bordscheiben ebenfalls gesondert magaziniert mitgeliefert werden. Der ohnehin verhältnismäßig hohe Aufwand für die Montage der-artiger Radial-Rollenwälzlager wird somit durch ein umständliches Entnehmen der Sicherungselemente aus dem Magazin und durch die notwendige Verwendung gesonderter Montagewerkzeuge für diese Sicherungselemente noch weiter erhöht und hat sich deshalb als äußerst kostenungünstig erwiesen.

### Aufgabe der Erfindung

Ausgehend von den dargelegten Nachteilen des bekannten Standes der Technik liegt der Erfindung deshalb die Aufgabe zu Grunde, ein Radial-Rollenwälzlager der beiden eingangs beschriebenen Arten zu konzipieren, dessen Montage vereinfacht und ohne gesonderte Montagewerkzeuge möglich ist und das sich dadurch durch niedrige Montagekosten auszeichnet.

### Beschreibung der Erfindung

Erfindungsgemäß wird diese Aufgabe sowohl bei einem Radial-Rollenwälzlager nach dem Oberbegriff des Anspruchs 1 als auch bei einem Radial-Rollenwälzla-ger nach dem Oberbegriff des Anspruchs 4 derart gelöst, dass die Sicherungselemente für die Bordscheiben und den Außen- bzw. Innenring und die Bordscheiben jeweils als fest miteinander verbundene Baueinheit ausgebildet sind.

Der Erfindung liegt somit die nicht ohne weiters auf der Hand liegende Erkenntnis zugrunde, dass es durch eine geeignete Form der Integration der Sicherungselemente mit den Bordscheiben möglich ist, einerseits die Anzahl der Bauteile und somit die notwendige Liefermenge des Herstellers für derartige Radial-Rollenwälzlager zu minimieren und andererseits zugleich deren Montageaufwand und die Kosten dafür erheblich zu senken, da das Entnehmen der Sicherungselemente aus einem Magazin entfallen kann und das Ein- bzw. Aufsetzen der Bordscheiben in ein Gehäuse oder auf eine Achse in einem einzigen Arbeitschritt ohne gesonderte Montagewerkzeuge erfolgen kann.
Bevorzugte Ausgestaltungen und vorteilhafte Weiterbildungen der beiden Arten eines erfindungsgemäß ausgebildeten Radial-Rollenwälzlagers werden in den Unteransprüchen 2 und 3 sowie 5 bis 7 beschrieben.
Danach ist es gemäß Anspruch 2 eine erste bevorzugte Ausführungsform des erfindungsgemäß ausgebildeten Radial-Rollenwälzlagers nach Anspruch 1, dass die Sicherungselemente durch zwei ellipsenartig geformte Federringe gebildet werden, die auf ihren Querachsen kleiner und auf ihren Längsachsen größer als der Durchmesser der Bordscheiben ausgebildet sind, wobei die Federringe mit ihren kleineren Durchmesserbereichen auf den Außenseiten der Bordscheiben befestigt und an ihren größeren Durchmesserbereichen elastisch einfedernd ausgebildet sind. Die elliptischen Federringe werden demnach mit ihren kleineren Durchmesserbereichen so auf den Bordscheiben befestigt, dass deren größere Durchmesserbereiche die Bordscheiben geringfügig überragen. Bei der Montage der Bordscheiben werden die Federringe per Handkraft auf den Durchmesser der Bordscheiben verformt, um die Bordscheiben in die Lagerbohrung des Gehäuses einführen und in dieser Lagerbohrung bis zum Außenring verschieben zu können. In der Endstellung der Bordscheiben federn die größeren Durchmesserbereiche der Federringe dann selbsttätig in eine umlaufende Nut im Gehäuse, so dass sowohl die Bordscheiben als auch der Außenring des Radial-Rollenwälzlagers axial fixiert sind.

Nach Anspruch 3 ist es eine weitere bevorzugte Ausführungsform des erfindungsgemäß ausgebildeten Radial-Rollenwälzlagers nach Anspruch 1, dass die Sicherungselemente durch jeweils zwei gekürzte Halbsegmente zweier ellipsenartig geformter und längsmittig geteilter Federringe gebildet werden, die auf ihren Querachsen kleiner und auf ihren Längsachsen größer als der Durchmesser der Bordscheiben ausgebildet sind, wobei die Halbsegmente jeweils mit ihrem Mittelbereichen auf den Außenseiten der Bordscheiben befestigt sowie an ihren Endbereichen elastisch einfedernd ausgebildet sind. Diese Ausführungsform unterscheidet sich somit von der ersten Ausführungsform dadurch, dass die elliptischen Federringe auf ihrer Längsachse in zwei Halbsegmente geteilt sind, die an jeweils ihren Enden geringfügig eingekürzt werden aber mit diesen Enden die Bordscheiben geringfügig überragen. Die Montage der mit diesen Sicherungselementen ausgebildeten Bordscheiben erfolgt dann in gleicher Weise wie bei der ersten Ausführungsform, bis die Endbereiche der Halbsegmente selbsttätig in eine umlaufende Nut im Gehäuse einfedern. Alternativ wäre es jedoch auch möglich, anstelle der Halbsegmente von elliptischen Federringen jeweils zwei gerade Federstäbe derart mit ihren Mittelbereichen auf den Außenseiten der Bordscheiben zu befestigen, dass deren Endbereiche die Außendurchmesser der Bordsscheiben geringfügig überragen und ebenfalls elastisch einfedernd ausgebildet sind.

Für ein erfindungsgemäß ausgebildetes Radial-Rollenwälzlager gemäß Anspruch 4 wird es dagegen als bevorzugte Ausführungsform durch Anspruch 5 vorgeschlagen, dass die Sicherungselemente durch jeweils zwei parallel zueinander sowie zum Innendurchmesser der Bordscheiben sekantenartig angeordnete Federdrahtsegmente gebildet werden, die mit ihren Enden auf den Außenseiten der Bordscheiben befestigt und an ihren Mittelbereichen elastisch ausfedernd ausgebildet sind. Da der Innendurchmesser der Bordscheiben in etwa dem Durchmesser der das Radial-Rollenwälzlager tragenden Achse entspricht, bedeutet dies, dass der Abstand der Federdrahtsegmente zueinander kleiner als der der Durchmesser der Achse ist und dass die Federdrahtsegmente mit ihren Mittelbereichen die Bohrungen in den Bordscheiben partiell verengen. Bei der Montage der Bordscheiben werden diese Federdrahtsegmente dann ebenfalls per Handkraft auf den Durchmesser der Achse aufgeweitet, um die Bordscheiben auf die Achse aufschieben und auf dieser bis zum Innenring des Radial-Rollenwälzlagers verschieben zu können. In der Endstellung der Bordscheiben federn die Federdrahtsegmente dann selbsttätig in eine umlaufende Nut in der Achse, so dass sowohl die Bordscheiben als auch der Innenring des Radial-Rollenwälzlagers axial fixiert sind. Anstelle der Befestigung der Federdrahtsegmente auf den Außenseiten der Bordscheiben mit deren beiden Enden ist es jedoch auch denkbar, diese nur mit einem Ende auf den Außenseiten der Bordscheiben zu befestigen, um damit deren Elastizität zu erhöhen.
Eine andere zweckmäßige Ausführungsform des erfindungsgemäß ausgebildeten Radial-Rollenwälzlagers gemäß Anspruch 4 ist es nach Anspruch 6 desweiteren, dass die Sicherungselemente durch jeweils zwei parallel zueinander sowie zum Innendurchmesser der Bordscheiben sekantenartig angeordnete Federdrahtsegmente gebildet werden, die mit ihren Enden auf den Außenseiten der Bordscheiben befestigt und deren Mittelbereiche durchtrennt sowie elastisch ausfedernd ausgebildet sind. Diese Ausführungsform unterscheidet sich von der vorbeschriebenen Ausführungsform vor allem dadurch, dass jedes Federdrahtsegment längsmittig zusätzlich in zwei Halbsegmente geteilt ist, um die Verwendung steiferer Federdrahtsegment zu ermöglichen und dabei deren Elastizität zu erhöhen. Die Montage der mit diesen Sicherungselementen ausgebildeten Bordscheiben erfolgt dann in gleicher Weise wie bei der vorgenannten Ausführungsform, bis die Federdrahtsegmente selbsttätig in eine umlaufende Nut in der Achse einfedern.

Schließlich wird es als vorteilhafte Ausgestaltung aller Ausführungsformen der beiden Arten erfindungsgemäß ausgebildeter Radial-Rollenwälzlager durch An-spruch 7 noch vorgeschlagen, dass die Befestigung der Sicherungselemente auf den Außenseiten der Bordscheiben entweder stoffschlüssig durch Schweiß-, Löt- oder Klebepunkte oder formschlüssig durch aus den Bordscheiben ausgeklinkte und die Sicherungselemente umschließende Durchstellungen erfolgt. Bei diesen Durchstellungen werden für jeden Befestigungspunkt zwei Materialstreifen derart aus den Bordscheiben ausgeklinkt, dass diese um die Breite des Sicherungselementes zueinander beabstandet rechtwinklig von den Bordscheiben abstehen. Zwischen diese Materialstreifen wird dann das Sicherungselement eingelegt und abschließend werden die Materialstreifen um die Sicherungselemente herum gebogen.

### Kurze Beschreibung der Zeichnungen

Die vorstehend beschriebenen Arten eines erfindungsgemäß ausgebildeten Radial-Rollenwälzlagers werden nachfolgend in jeweils zwei bevorzugten Ausführungsformen unter Bezugnahme auf die beigefügten Zeichnungen näher erläutert. Dabei zeigen:
- Figur 1: eine schematische Darstellung des Querschnitts A - A gemäß Figur 2 durch eine Lageranordnung mit einer ersten Art eines erfindungsgemäß ausgebildeten Radial-Rollenwälzlagers;
- Figur 2: eine schematische Darstellung einer Seitenansicht auf eine erste Ausführungsform des erfindungsgemäß ausgebildeten Radial-Rollenwälzlagers nach Figur 1;
- Figur 3: eine schematische Darstellung einer Seitenansicht auf eine zweite Ausführungsform des erfindungsgemäß ausgebildeten Radial-Rollenwälzlagers nach Figur 1;
- Figur 4: eine schematische Darstellung des Querschnitts B - B gemäß Figur 5 durch eine Lageranordnung mit einer zweiten Art eines erfindungsgemäß ausgebildeten Radial-Rollenwälzlagers;
- Figur 5: eine schematische Darstellung einer Seitenansicht auf eine erste Ausführungsform des erfindungsgemäß ausgebildeten Radial-Rollenwälzlagers nach Figur 4;
- Figur 6: eine schematische Darstellung einer Seitenansicht auf eine zweite Ausführungsform des erfindungsgemäß ausgebildeten Radial-Rollenwälzlagers nach Figur 4.

### Ausführliche Beschreibung der Zeichnungen

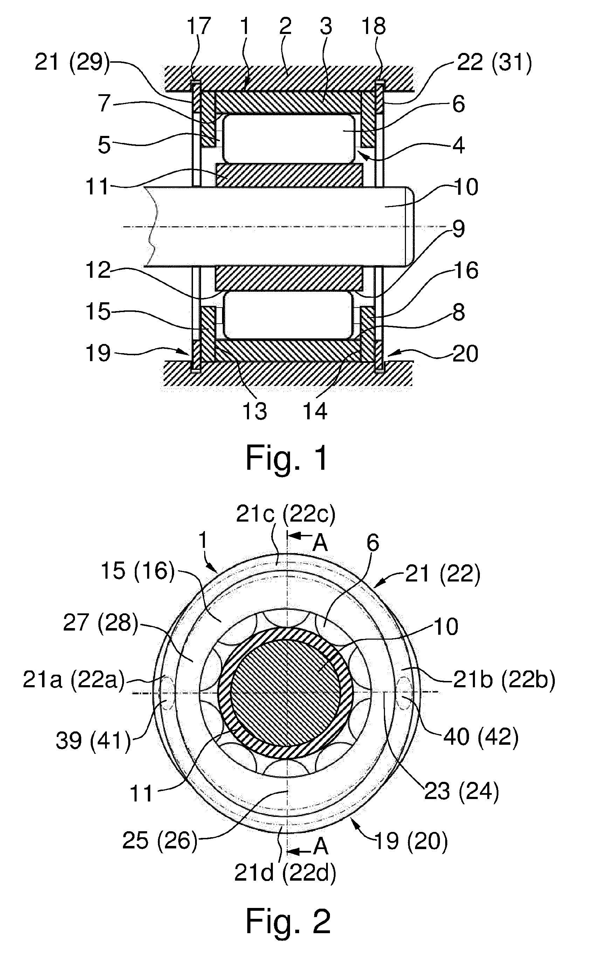

In Figur 1 ist schematisch eine erste Art eines Radial-Rollenwälzlagers 1 dargestellt, welches im Wesentlichen aus einem in ein Gehäuse 2 eingesetzten glattzylindrischen Außenring 3 und aus einem in diesem Außenring 3 angeordneten Rollenkranz 4 besteht. Dieser Rollenkranz 4 wird durch eine Vielzahl in einen Lagerkäfig 5 eingesetzter sowie von diesem in Umfangsrichtung in gleichmäßigen Abständen gehaltener rollenförmiger Wälzkörper 6 gebildet, die auf einer durch die Innenmantelfläche 7 des Außenrings 3 gebildeten Außenlaufbahn 8 und auf einer durch die Außenmantelfläche 9 eines auf eine Welle 10 aufgeschobenen glattzylindrischen Innenrings 11 gebildeten Innenlaufbahn 12 abrollen. Deutlich sichtbar erfolgt die die axiale Führung des Rollenkranzes 4 dabei durch zwei an den Axialseiten 13, 14 des Außenrings 3 anliegende, separate Bordscheiben 15, 16, die zusammen mit dem Außenring 3 durch in umlaufende Nuten 17, 18 im Gehäuse 2 eingreifende Sicherungselemente 19, 20 axial fixiert sind, welche erfindungsgemäß mit den Bordscheiben 15, 16 jeweils als fest miteinander verbundene Baueinheit ausgebildet sind.

Aus Figur 2 ist desweiteren ersichtlich, dass die Sicherungselemente 19, 20 in einer ersten Ausführungsform des erfindungsgemäß ausgebildeten Radial-Rollenwälzlagers 1 durch zwei ellipsenartig geformte Federringe 21, 22 gebildet werden, die auf ihren Querachsen 23, 24 kleiner und auf ihren Längsachsen 25, 26 größer als der Durchmesser der Bordscheiben 15, 16 ausgebildet sind. Diese Federringe 21, 22 sind dabei mit ihren kleineren Durchmesserbereichen 21 a, 21 b, 22a, 22b durch Schweiß-, Löt- oder Klebepunkte 39, 40, 41, 42 auf den Außenseiten 27, 28 der Bordscheiben 15, 16 befestigt und an ihren größeren, die Bordscheiben geringfügig überragenden Durchmesserbereichen 21 c, 21 d, 22c, 22d derart elastisch einfedernd ausgebildet, dass diese bei der Montage der Bordscheiben 15, 16 per Handkraft auf den Durchmesser der Bordscheiben15, 16 verformt und in deren Endstellung selbsttätig in die umlaufenden Nuten 17, 18 im Gehäuse 2 einfedern können.

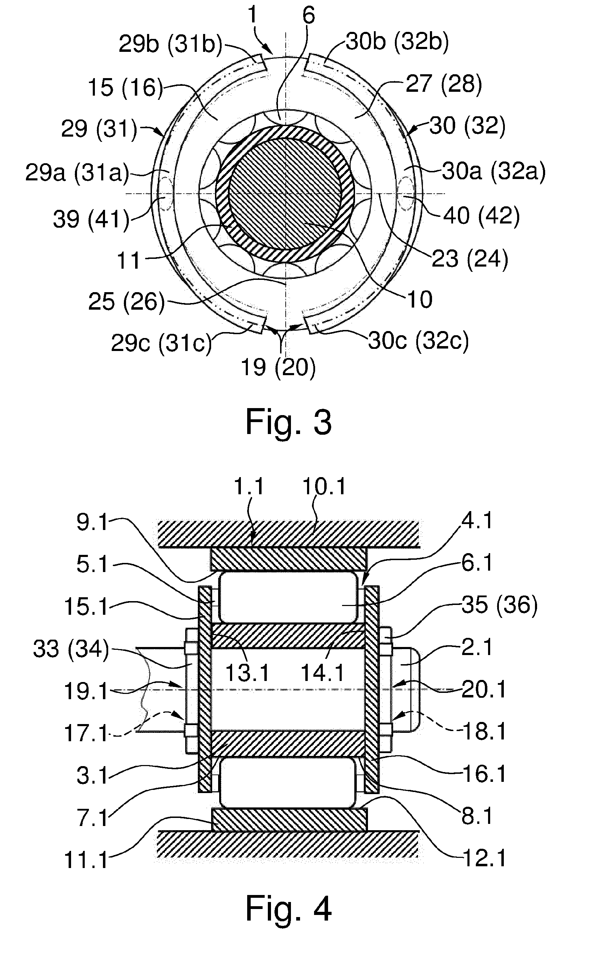

Bei der in Figur 3 dargestellten zweiten Ausführungsform des erfindungsgemäß ausgebildeten Radial-Rollenwälzlagers 1 werden die Sicherungselemente 19, 20 dagegen durch jeweils zwei gekürzte Halbsegmente 29, 30, 31, 32 zweier ellipsenartig geformter und längsmittig geteilter Federringe gebildet, die wie bei der ersten Ausführungsform auf ihren Querachsen 23, 24 kleiner und auf ihren Längsachsen 25, 26 größer als der Durchmesser der Bordscheiben 15, 16 ausgebildet sind. Auch diese Halbsegmente 29, 30, 31, 32 sind jeweils mit ihrem Mittelbereichen 29a, 30a, 31 a, 32a durch Schweiß-, Löt- oder Klebepunkte 39, 40, 41, 42 auf den Außenseiten 27, 28 der Bordscheiben 15, 16 befestigt sowie an ihren Endbereichen 29b, 29c, 30b, 30c, 31 b, 31 c, 32b, 32c derart elastisch einfedernd ausgebildet, dass diese bei der Montage der Bordscheiben 15, 16 per Handkraft auf den Durchmesser der Bordscheiben15, 16 verformt und in deren Endstellung selbsttätig in die umlaufenden Nuten 17, 18 im Gehäuse 2 einfedern können.

In Figur 4 ist darüber hinaus schematisch eine zweite Art eines Radial-Rollenwälzlagers 1.1 dargestellt, welches sich von der ersten Art durch eine Funktionsumkehr unterscheidet und im Wesentlichen aus einem auf eine Achse 2.1 aufgeschobenen glattzylindrischen Innenring 3.1 und aus einem auf diesem Innenring 3.1 angeordneten Rollenkranz 4.1 besteht. Dieser Rollenkranz 4.1 wird ebenfalls durch eine Vielzahl in einen Lagerkäfig 5.1 eingesetzter sowie von diesem in Umfangsrichtung in gleichmäßigen Abständen gehaltener rollenförmiger Wälzkörper 6.1 gebildet wird, die auf einer durch die Außenmantelfläche 7.1 des Innenrings 3.1 gebildeten Innenlaufbahn 8.1 und auf einer durch die Innenmantelfläche 9.1 eines in ein Rotationsteil 10.1 eingesetzten glattzylindrischen Außenrings 11.1 gebildeten Außenlaufbahn 12.1 abrollen. Deutlich sichtbar erfolgt die die axiale Führung des Rollenkranzes 4.1 hier durch zwei an den Axialseiten 13.1, 14.1 des Innenrings 3.1 anliegende, separate Bordscheiben 15.1, 16.1, die zusammen mit dem Innenring 3.1 durch in umlaufende Nuten 17.1, 18.1 in der Achse 2.1 eingreifende Sicherungselemente 19.1, 20.1 axial fixiert sind, welche ebenfalls erfindungsgemäß mit den Bordscheiben 15.1, 16.1 jeweils als fest miteinander verbundene Baueinheit ausgebildet sind.

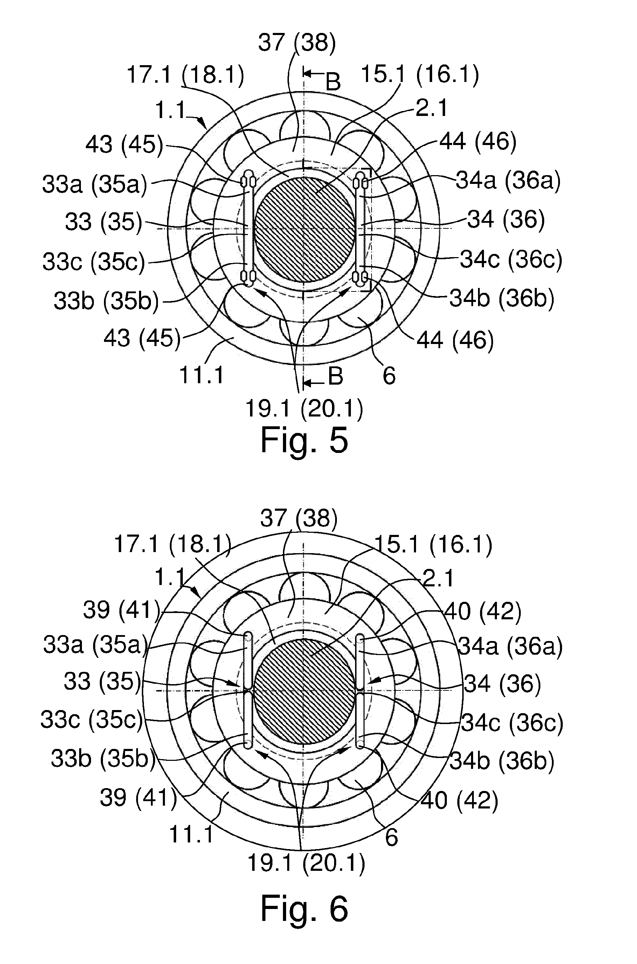

Die in Figur 5 gezeigte erste Ausführungsform eines solchen erfindungsgemäß ausgebildeten Radial-Rollenwälzlagers 1.1 zeichnet sich dabei dadurch aus, dass die Sicherungselemente 19.1, 20.1 durch jeweils zwei parallel zueinander sowie zum Innendurchmesser der Bordscheiben 15.1, 16.1 sekantenartig angeordnete Federdrahtsegmente 33, 34, 35, 36 gebildet werden, die mit ihren Enden 33a, 33b, 34a, 34b, 35a, 35b, 36a, 36b durch aus den Bordscheiben 15.1, 16.1 ausgeklinkte Durchstellungen 43, 44, 45, 46 auf den Außenseiten 37, 38 der Bordscheiben 15.1, 16.1 befestigt und an ihren Mittelbereichen 33c, 34c, 35c, 36c elastisch ausfedernd ausgebildet sind. Deutlich sichtbar ist dabei der Abstand der Federdrahtsegmente 33, 34, 35, 36 zueinander kleiner als der der Durchmesser der Achse 2.1, so dass die Federdrahtsegmente mit ihren Mittelbereichen 33c, 34c, 35c, 36c die Bohrungen in den Bordscheiben 15.1, 16.1 partiell verengen. Bei der Montage der Bordscheiben 15.1, 16.1 werden diese Federdrahtsegmente 33, 34, 35, 36 dann ebenfalls per Handkraft auf den Durchmesser der Achse 2.1 aufgeweitet und die Bordscheiben 15.1, 16.1 auf die Achse 2.1 aufgeschoben, so dass die Federdrahtsegmente 33, 34, 35, 36 in deren Endstellung selbsttätig in die umlaufenden Nuten 17.1, 18.1 in der Achse 2.1 einfedern.

Schließlich ist in Figur 6 noch eine zweite Ausführungsform eines erfindungsgemäß ausgebildeten Radial-Rollenwälzlagers 1.1 abgebildet, bei der die Sicherungselemente 19.1, 20.1 ebenfalls durch jeweils zwei parallel zueinander sowie zum Innendurchmesser der Bordscheiben 15.1, 16.1 sekantenartig angeordnete Federdrahtsegmente 33, 34, 35, 36 gebildet werden, die jedoch durch Schweiß-, Löt- oder Klebepunkte 39, 40, 41, 42 mit ihren Enden 33a, 33b, 34a, 34b, 35a, 35b, 36a, 36b auf den Außenseiten 37.1, 38.1 der Bordscheiben 15.1, 16.1 befestigt und an deren Mittelbereiche 33c, 34c, 35c, 36c zur Erhöhung ihrer Elastizität zusätzlich durchtrennt ausgebildet sind. Die Montage der mit diesen Sicherungselementen 19.1, 20.1 ausgebildeten Bordscheiben 15.1, 16.1 erfolgt dann in gleicher Weise wie bei der ersten Ausführungsform, bis die Federdrahtsegmente 33, 34, 35, 36 selbsttätig in die umlaufenden Nuten 17.1, 18.1 in der Achse 2.1 einfedern.

**Bezugszahlenliste**

| | | | |
|---|---|---|---|
| 1 | Radial-Rollenwälzlager | 16.1 | Bordscheibe an 3.1 |
| 1.1 | Radial-Rollenwälzlager | 17 | Nut in 2 |
| 2 | Gehäuse | 17.1 | Nut in 2.1 |
| 2.1 | Achse | 18 | Nut in 2 |
| 3 | Außenring von 1 | 18.1 | Nut in 2.1 |
| 3.1 | Innenring von 1.1 | 19 | Sicherungselement für 15 |
| 4 | Rollenkranz von 1 | 19.1 | Sicherungselement für 15.1 |
| 4.1 | Rollenkranz von 1.1 | 20 | Sicherungselement für 16 |
| 5 | Lagerkäfig von 1 | 20.1 | Sicherungselement für 16.1 |
| 5.1 | Lagerkäfig von 1.1 | 21 | Federring |
| 6 | Wälzkörper von 1 | 21a | kleiner Durchmesserbereich von 21 |
| 6.1 | Wälzkörper von 1.1 | 21b | kleiner Durchmesserbereich von 21 |
| 7 | Innenmantelfläche von 3 | 21c | großer Durchmesserbereich von 21 |
| 7.1 | Außenmantelfläche von 3.1 | 21d | großer Durchmesserbereich von 21 |
| 8 | Außenlaufbahn für 6 | 22 | Federring |
| 8.1 | Innenlaufbahn für 6.1 | 22a | kleiner Durchmesserbereich von 22 |
| 9 | Außenmantelfläche von 10/11 | 22b | kleiner Durchmesserbereich von 22 |
| 9.1 | Innenmantelfläche von 10.1/11.1 | 22c | großer Durchmesserbereich von 22 |
| 10 | Welle | 22d | großer Durchmesserbereich von 22 |
| 10.1 | Rotationsteil | 23 | Querachse von 21 |
| 11 | Innenring von 1 | 24 | Querachse von 22 |
| 11.1 | Außenring von 1.1 | 25 | Längsachse von 21 |
| 12 | Innenlaufbahn für 6 | 26 | Längsachse von 22 |
| 12.1 | Außenlaufbahn für 6.1 | 27 | Außenseite von 15 |
| 13 | Axialseite von 3 | 28 | Außenseite von 16 |
| 13.1 | Axialseite von 3.1 | 29 | Halbsegment |
| 14 | Axialseite von 3 | 29a | Mittelbereich von 29 |
| 14.1 | Axialseite von 3.1 | 29b | Endbereich von 29 |
| 15 | Bordscheibe an 3 | 29c | Endbereich von 29 |
| 15.1 | Bordscheibe an 3.1 | 30 | Halbsegment |
| 16 | Bordscheibe an 3 | 30a | Mittelbereich von 30 |
| 30b | Endbereich von 30 | 35 | Federdrahtsegment |
| 30c | Endbereich von 30 | 35a | Ende von 35 |
| 31 | Halbsegment | 35b | Ende von 35 |
| 31a | Mittelbereich von 31 | 35c | Mittelbereich von 35 |
| 31b | Endbereich von 31 | 36 | Federdrahtsegment |
| 31c | Endbereich von 31 | 36a | Ende von 36 |
| 32 | Halbsegment | 36b | Ende von 36 |
| 32a | Mittelbereich von 32 | 36c | Mittelbereich von 36 |
| 32b | Endbereich von 32 | 37 | Außenseite von 15.1 |
| 32c | Endbereich von 32 | 38 | Außenseite von 16.1 |
| 33 | Federdrahtsegment | 39 | Schweiß-, Löt- oder Klebepunkt |
| 33a | Ende von 33 | 40 | Schweiß-, Löt- oder Klebepunkt |
| 33b | Ende von 33 | 41 | Schweiß-, Löt- oder Klebepunkt |
| 33c | Mittelbereich von 33 | 42 | Schweiß-, Löt- oder Klebepunkt |
| 34 | Federdrahtsegment | 43 | Durchstellung |
| 34a | Ende von 34 | 44 | Durchstellung |
| 34b | Ende von 34 | 45 | Durchstellung |
| 34c | Mittelbereich von 34 | 46 | Durchstellung |

## Patentansprüche

1. Radial-Rollenwälzlager (1), insbesondere Zylinderrollen- oder Nadellager, im Wesentlichen bestehend aus einem in ein Gehäuse (2) eingesetzten glattzylindrischen Außenring (3) und aus einem in diesem Außenring (3) angeordneten Rollenkranz (4), der durch eine Vielzahl in einen Lagerkäfig (5) eingesetzter sowie von diesem in Umfangsrichtung in gleichmäßigen Abständen gehaltener rollenförmiger Wälzkörper (6) gebildet wird, die auf einer durch die Innenmantelfläche (7) des Außenrings (3) gebildeten Außenlaufbahn (8) und auf einer durch die Außenmantelfläche (9) einer zu lagernden Welle (10) oder eines auf die Welle (10) aufgeschobenen glattzylindrischen Innenrings (11) gebildeten Innenlaufbahn (12) abrollen, wobei die axiale Führung des Rollenkranzes (4) durch zwei an den Axialseiten (13, 14) des Außenrings (3) anliegende, separate Bordscheiben (15, 16) erfolgt, die zusammen mit dem Außenring (3) durch in umlaufende Nuten (17, 18) im Gehäuse (2) eingreifende Sicherungselemente (19, 20) axial fixiert sind, **dadurch gekennzeichnet, dass** die Sicherungselemente (19, 20) für die Bordscheiben (15, 16) und den Außenring (3) und die Bordscheiben (15, 16) jeweils als fest miteinander verbundene Baueinheit ausgebildet sind.

2. Radial-Rollenwälzlager nach Anspruch 1, **dadurch gekennzeichnet, dass** die Sicherungselemente (19, 20) durch zwei ellipsenartig geformte Federringe (21, 22) gebildet werden, die auf ihren Querachsen (23, 24) kleiner und auf ihren Längsachsen (25, 26) größer als der Durchmesser der Bordscheiben (15, 16) ausgebildet sind, wobei die Federringe (21, 22) mit ihren kleineren Durchmesserbereichen (21 a, 21 b, 22a, 22b) auf den Außenseiten (27, 28) der Bordscheiben (15, 16) befestigt und an ihren größeren Durchmesserbereichen (21 c, 21 d, 22c, 22d) elastisch einfedernd ausgebildet sind.

3. Radial-Rollenwälzlager nach Anspruch 1, **dadurch gekennzeichnet, dass** die Sicherungselemente (19, 20) durch jeweils zwei gekürzte Halbsegmente (29, 30, 31, 32) zweier ellipsenartig geformter und längsmittig geteilter Federringe gebildet werden, die auf ihren Querachsen (23, 24) kleiner und auf ihren Längsachsen (25, 26) größer als der Durchmesser der Bordscheiben (15, 16) ausgebildet sind, wobei die Halbsegmente (29, 30, 31, 32) jeweils mit ihrem Mittelbereichen (29a, 30a, 31 a, 32a) auf den Außenseiten (27, 28) der Bordscheiben (15, 16) befestigt sowie an ihren Endbereichen (29b, 29c, 30b, 30c, 31 b, 31 c, 32b, 32c) elastisch einfedernd ausgebildet sind.

4. Radial-Rollenwälzlager (1.1), insbesondere Zylinderrollen- oder Nadellager, im Wesentlichen bestehend aus einem auf eine Achse (2.1) aufgeschobenen glattzylindrischen Innenring (3.1) und aus einem auf diesem Innenring (3.1) angeordneten Rollenkranz (4.1), der durch eine Vielzahl in einen Lagerkäfig (5.1) eingesetzter sowie von diesem in Umfangsrichtung in gleichmäßigen Abständen gehaltener rollenförmiger Wälzkörper (6.1) gebildet wird, die auf einer durch die Außenmantelfläche (7.1) des Innenrings (3.1) gebildeten Innenlaufbahn (8.1) und auf einer durch die Innenmantelfläche (9.1) eines zu lagernden Rotationsteils (10.1) oder eines in das Rotationsteil (10.1) eingesetzten glattzylindrischen Außenrings (11.1) gebildeten Außenlaufbahn (12.1) abrollen, wobei die axiale Führung des Rollenkranzes (4.1) durch zwei an den Axialseiten (13.1, 14.1) des Innenrings (3.1) anliegende, separate Bordscheiben (15.1, 16.1) erfolgt, die zusammen mit dem Innenring (3.1) durch in umlaufende Nuten (17.1, 18.1) in der Achse (2.1) eingreifende Sicherungselemente (19.1, 20.1) axial fixiert sind, **dadurch gekennzeichnet, dass** die Sicherungselemente (19.1, 20.1) für die Bordscheiben (15.1, 16.1) und den Innenring (3.1) und die Bordscheiben (15.1, 16.1) jeweils als fest miteinander verbundene Baueinheit ausgebildet sind.

5. Radial-Rollenwälzlager nach Anspruch 4, **dadurch gekennzeichnet, dass** die Sicherungselemente (19.1, 20.1) durch jeweils zwei parallel zueinander sowie zum Innendurchmesser der Bordscheiben (15.1, 16.1) sekantenartig angeordnete Federdrahtsegmente (33, 34, 35, 36) gebildet werden, die mit ihren Enden (33a, 33b, 34a, 34b, 35a, 35b, 36a, 36b) auf den Außenseiten (37, 38) der Bordscheiben (15.1, 16.1) befestigt und an ihren Mittelbereichen (33c, 34c, 35c, 36c) elastisch ausfedernd ausgebildet sind.

6. Radial-Rollenwälzlager nach Anspruch 4, **dadurch gekennzeichnet, dass** die Sicherungselemente (19.1, 20.1) durch jeweils zwei parallel zueinander sowie zum Innendurchmesser der Bordscheiben (15.1, 16.1) sekantenartig angeordnete Federdrahtsegmente (33, 34, 35, 36) gebildet werden, die mit ihren Enden (33a, 33b, 34a, 34b, 35a, 35b, 36a, 36b) auf den Außenseiten (37.1, 38.1) der Bordscheiben (15.1, 16.1) befestigt und deren Mittelbereiche (33c, 34c, 35c, 36c) durchtrennt sowie elastisch ausfedernd ausgebildet sind.

7. Radial-Rollenwälzlager nach den Ansprüchen 2 oder 3 oder 5 oder 6, **dadurch gekennzeichnet, dass** die Befestigung der Sicherungselemente (19, 20, 19.1, 20.1) auf den Außenseiten (27, 28, 37, 38) der Bordscheiben (15, 16, 15.1, 16.1) entweder stoffschlüssig durch Schweiß-, Löt- oder Klebepunkte (39, 40, 41, 42) oder formschlüssig durch aus den Bordscheiben (15, 16, 15.1, 16.1) ausgeklinkte und die Sicherungselemente (19, 20, 19.1, 20.1) umschließende Durchstellungen (43, 44, 45, 46) erfolgt.

## Claims

1. Radial roller bearing (1), in particular cylindrical roller bearing or needle bearing, substantially consisting of a smooth cylindrical outer ring (3) which is inserted into a housing (2) and of a roller crown ring (4) which is arranged in the said outer ring (3) and is formed by a multiplicity of roller-shaped rolling bodies (6) which are inserted into a bearing cage (5), are held at uniform spacings in the circumferential direction by the latter, and roll on an outer raceway (8) which is formed by the inner circumferential face (7) of the outer ring (3) and on an inner raceway (12) which is formed by the outer circumferential face (9) of a shaft (10) to be mounted or of a smooth cylindrical inner ring (11) which is pushed onto the shaft (10), the axial guidance of the roller crown ring (4) being effected by way of two separate flanged discs (15, 16) which bear against the axial sides (13, 14) of the outer ring (3) and, together with the outer ring (3), are fixed axially by way of securing elements (19, 20) which engage into circumferential grooves (17, 18) in the housing (2), **characterized in that** the securing elements (19, 20) for the flanged discs (15, 16) and for the outer ring (3) and the flanged discs (15, 16) are configured in each case as a structural unit, in which they are connected fixedly to one another.

2. Radial roller bearing according to Claim 1, **characterized in that** the securing elements (19, 20) are formed by two elliptically shaped spring rings (21, 22) which are smaller on their transverse axes (23, 24) and are larger on their longitudinal axes (25, 26) than the diameter of the flanged discs (15, 16), the spring rings (21, 22) being fastened by way of their smaller diameter regions (21a, 21b, 22a, 22b) on the outer sides (27, 28) of the flanged discs (15, 16) and being of elastically deflecting configuration on their larger diameter regions (21c, 21d, 22c, 22d).

3. Radial roller bearing according to Claim 1, **characterized in that** the securing elements (19, 20) are formed by in each case two shortened half segments (29, 30, 31, 32) of two elliptically shaped and longitudinally centrally split spring rings which are of smaller configuration on their transverse axes (23, 24) and are of larger configuration on their longitudinal axes (25, 26) than the diameter of the flanged discs (15, 16), the half segments (29, 30, 31, 32) being fastened in each case by way of their centre regions (29a, 30a, 31a, 32a) on the outer sides (27, 28) of the flanged discs (15, 16) and being of elastically deflecting configuration on their end regions (29b, 29c, 30b, 30c, 31b, 31c, 32b, 32c).

4. Radial roller bearing (1.1), in particular cylindrical roller bearing or needle bearing, substantially consisting of a smooth cylindrical inner ring (3.1) which is pushed onto an axle (2.1) and of a roller crown ring (4.1) which is arranged on the said inner ring (3.1) and is formed by a multiplicity of roller-shaped rolling bodies (6.1) which are inserted into a bearing cage (5.1), are held at uniform spacings in the circumferential direction by the latter, and roll on an inner raceway (8.1) which is formed by the outer circumferential face (7.1) of the inner ring (3.1) and on an outer raceway (12.1) which is formed by the inner circumferential face (9.1) of a rotational part (10.1) to be mounted or of a smooth cylindrical outer ring (11.1) which is inserted into the rotational part (10.1), the axial guidance of the roller crown ring (4.1) being effected by way of two separate flanged discs (15.1, 16.1) which bear against the axial sides (13.1, 14.1) of the inner ring (3.1) and, together with the inner ring (3.1), are fixed axially by way of securing elements (19.1, 20.1) which engage into circumferential grooves (17.1, 18.1) in the axle (2.1), **characterized in that** the securing elements (19.1, 20.1) for the flanged discs (15.1, 16.1) and for the inner ring (3.1) and the flanged discs (15.1, 16.1) are configured in each case as a structural unit, in which they are connected fixedly to one another.

5. Radial roller bearing according to Claim 4, **characterized in that** the securing elements (19.1, 20.1) are formed by in each case two spring wire segments (33, 34, 35, 36) which are arranged parallel to one another and in a secant-like manner with respect to the internal diameter of the flanged discs (15.1, 16.1), are fastened by way of their ends (33a, 33b, 34a, 34b, 35a, 35b, 36a, 36b) on the outer sides (37, 38) of the flanged discs (15.1, 16.1), and are of elastically deflecting configuration on their centre regions (33c, 34c, 35c, 36c).

6. Radial roller bearing according to Claim 4, **characterized in that** the securing elements (19.1, 20.1) are formed by in each case two spring wire segments (33, 34, 35, 36) which are arranged parallel to one another and in a secant-like manner with respect to the internal diameter of the flanged discs (15.1, 16.1), are fastened by way of their ends (33a, 33b, 34a, 34b, 35a, 35b, 36a, 36b) on the outer sides (37.1, 38.1) of the flanged discs (15.1, 16.1), and the centre regions (33c, 34c, 35c, 36c) of which are of severed and elastically deflecting configuration.

7. Radial roller bearing according to Claims 2 or 3 or 5 or 6, **characterized in that** the fastening of the securing elements (19, 20, 19.1, 20.1) on the outer sides (27, 28, 37, 38) of the flanged discs (15, 16, 15.1, 16.1) are effected either in an integrally joined manner by way of welded, brazed or adhesively bonded points (39, 40, 41, 42) or in a positively locking manner by way of bumps (43, 44, 45, 46) which are notched out of the flanged discs (15, 16, 15.1, 16.1) and enclose the securing elements (19, 20, 19.1, 20.1).

## Revendications

1. Palier à roulement radial à rouleaux (1), en particulier palier à rouleaux cylindriques ou palier à aiguilles, constitué essentiellement d'une bague extérieure (3) cylindrique lisse insérée dans un boîtier (2) et d'une couronne de rouleaux (4) disposée dans cette bague extérieure (3), laquelle couronne de rouleaux est formée par une pluralité de corps de roulement (6) en forme de rouleaux insérés dans une cage de palier (5) ainsi que retenus par celle-ci à des distances régulières dans la direction périphérique, lesquels corps de roulement roulent sur un chemin de roulement extérieur (8) formé par la surface d'enveloppe intérieure (7) de la bague extérieure (3) et sur un chemin de roulement intérieur (12) formé par la surface d'enveloppe extérieure (9) d'un arbre (10) devant être monté sur palier ou d'une bague intérieure (11) cylindrique lisse enfilée sur l'arbre (10), le guidage axial de la couronne de rouleaux (4) s'effectuant au moyen de deux disques de bord séparés (15, 16) s'appliquant contre les côtés axiaux (13, 14) de la bague extérieure (3), lesquels disques de bord sont, conjointement avec la bague extérieure (3), fixés axialement au moyen d'éléments de fixation (19, 20) venant en prise dans des rainures périphériques (17, 18) dans le boîtier (2), **caractérisé en ce que** les éléments de fixation (19, 20) pour les disques de bord (15, 16) et la bague extérieure (3) et les disques de bord (15, 16) sont réalisés respectivement sous forme d'unité structurale reliée solidement.

2. Palier à roulement radial à rouleaux selon la revendication 1, **caractérisé en ce que** les éléments de fixation (19, 20) sont formés par deux bagues élastiques (21, 22) de forme elliptique qui sont réalisées de manière à être plus petites que le diamètre des disques de bord (15, 16) sur leurs axes transversaux (23, 24) et plus grandes que le diamètre des disques de bord sur leurs axes longitudinaux (25, 26), les bagues élastiques (21, 22) étant fixées par leurs régions de diamètre plus petit (21a, 21b, 22a, 22b) sur les côtés extérieurs (27, 28) des disques de bord (15, 16) et étant réalisées de manière à présenter une compression élastique au niveau de leurs régions de diamètre plus grand (21c, 21d, 22c, 22d).

3. Palier à roulement radial à rouleaux selon la revendication 1, **caractérisé en ce que** les éléments de fixation (19, 20) sont formés par deux demi-segments raccourcis (29, 30, 31, 32) respectifs de deux bagues élastiques de forme elliptique et divisées de manière centrale longitudinalement qui sont réalisées de manière à être plus petites que le diamètre des disques de bord (15, 16) sur leurs axes transversaux (23, 24) et plus grandes que le diamètre des disques de bord sur leurs axes longitudinaux (25, 26), les demi-segments (29, 30, 31, 32) étant fixés à chaque fois par leurs régions centrales (29a, 30a, 31a, 32a) sur les côtés extérieurs (27, 28) des disques de bord (15, 16) et étant réalisés de manière à présenter une compression élastique au niveau de leurs régions d'extrémité (29b, 29c, 30b, 30c, 31b, 31c, 32b, 32c).

4. Palier à roulement radial à rouleaux (1.1), en particulier palier à rouleaux cylindriques ou palier à aiguilles, constitué essentiellement d'une bague intérieure (3.1) cylindrique lisse enfilée sur un axe (2.1) et d'une couronne de rouleaux (4.1) disposée sur cette bague intérieure (3.1), laquelle couronne de rouleaux est formée par une pluralité de corps de roulement (6.1) en forme de rouleaux insérés dans une cage de palier (5.1) ainsi que retenus par celle-ci à des distances régulières dans la direction périphérique, lesquels corps de roulement roulent sur un chemin de roulement intérieur (8.1) formé par la surface d'enveloppe extérieure (7.1) de la bague intérieure (3.1) et sur un chemin de roulement extérieur (12.1) formé par la surface d'enveloppe intérieure (9.1) d'une partie rotative (10.1) devant être montée sur palier ou d'une bague extérieure (11.1) cylindrique lisse insérée dans la partie rotative (10.1), le guidage axial de la couronne de rouleaux (4.1) s'effectuant au moyen de deux disques de bord séparés (15.1, 16.1) s'appliquant contre les côtés axiaux (13.1, 14.1) de la bague intérieure (3.1), lesquels disques de bord sont, conjointement avec la bague intérieure (3.1), fixés axialement au moyen d'éléments de fixation (19.1, 20.1) venant en prise dans des rainures périphériques (17.1, 18.1) dans l'axe (2.1), **caractérisé en ce que** les éléments de fixation (19.1, 20.1) pour les disques de bord (15.1, 16.1) et la bague intérieure (3.1) et les disques de bord (15.1, 16.1) sont réalisés respectivement sous forme d'unité structurale reliée solidement.

5. Palier à roulement radial à rouleaux selon la revendication 4, **caractérisé en ce que** les éléments de fixation (19.1, 20.1) sont formés par deux segments de fil métallique à ressort (33, 34, 35, 36) respectifs disposés parallèlement l'un à l'autre ainsi que de manière sécante au diamètre intérieur des disques de bord (15.1, 16-1), lesquels segments de fil métallique à ressort sont fixés par leurs extrémités (33a, 33b, 34a, 34b, 35a, 35b, 36a, 36b) sur les côtés extérieurs (37, 38) des disques de bord (15.1, 16.1) et sont réalisés de manière à présenter une détente élastique au niveau de leurs régions centrales (33c, 34c, 35c, 36c).

6. Palier à roulement radial à rouleaux selon la revendication 4, **caractérisé en ce que** les éléments de fixation (19.1, 20.1) sont formés par deux segments de fil métallique à ressort (33, 34, 35, 36) respectifs disposés parallèlement l'un à l'autre ainsi que de manière sécante au diamètre intérieur des disques de bord (15.1, 16.1), lesquels segments de fil métallique à ressort sont fixés par leurs extrémités (33a, 33b, 34a, 34b, 35a, 35b, 36a, 36b) sur les côtés extérieurs (37.1, 38.1) des disques de bord (15.1, 16.1) et dont les régions centrales (33c, 34c, 35c, 36c) sont réalisées de manière sectionnée ainsi que de manière à présenter une détente élastique.

7. Palier à roulement radial à rouleaux selon les revendications 2 ou 3 ou 5 ou 6, **caractérisé en ce que** la fixation des éléments de fixation (19, 20, 19.1, 20.1) sur les côtés extérieurs (27, 28, 37, 38) des disques de bord (15, 16, 15.1, 16.1) s'effectue soit par liaison de matière au moyen de points de soudure, de brasure ou de collage (39, 40, 41, 42) soit par engagement par complémentarité de formes au moyen de découpes (43, 44, 45, 46) encochées dans les disques de bord (15, 16, 15.1, 16.1) et entourant les éléments de fixation (19, 20, 19.1, 20.1).
